# EUROPÄISCHE PATENTANMELDUNG

(11) **EP 2 884 140 A1**
(43) Veröffentlichungstag der Anmeldung: **17.06.2015**
(21) Anmeldenummer: 13197047.7
(22) Anmeldetag: 13.12.2013
(51) Int. Cl.: F16K 5/04, F16K 5/12, F16K 27/06

(54) **Dosierventil Diamantbohren**

(71) Anmelder: HILTI Aktiengesellschaft, 9494 Schaan (LI)
(72) Erfinder: Sattler, Christian, 87640 Biessenhofen (DE); Wörz, Sonya, 86929 Penzing (DE)
(74) Vertreter: Hilti Aktiengesellschaft Corporate Intellectual Property

(57) **Zusammenfassung**

Absperrvorrichtung zum wenigstens teilweisen Blockieren eines Fluids in einer Fluidleitung enthaltend eine Blockiereinrichtung mit einem im Wesentlichen zylindrischen Grundkörper, die ein erstes Ende und ein zweites Ende enthält, wobei die Blockiereinrichtung in der Fluidleitung positionierbar ist und durch Drehen in eine Drehrichtung (A) um eine Rotationsachse (R) reversibel von einer Blockierstellung, in der kein Fluid durch die Blockiereinrichtung fließen kann, in eine Durchflussstellung, in der Fluid durch die Blockiereinrichtung fließen kann, einstellbar ist.

Die Blockiereinrichtung enthält eine erste Durchlassöffnung und eine zweite Durchlassöffnung, wobei der Querschnitt der ersten Durchlassöffnung kleiner ist als der Querschnitt der zweiten Durchlassöffnung.

## Beschreibung

Die vorliegende Erfindung betrifft eine Absperrvorrichtung zum wenigstens teilweisen Blockieren eines Fluids in einer Fluidleitung. Die Absperrvorrichtung enthält dabei eine Blockiereinrichtung mit einem im Wesentlichen zylindrischen Grundkörper, die ein erstes Ende und ein zweites Ende enthält, wobei die Blockiereinrichtung in der Fluidleitung positionierbar ist und durch Drehen in eine Drehrichtung um eine Rotationsachse reversibel von einer Blockierstellung, in der kein Fluid durch die Blockiereinrichtung fließen kann, in eine Durchflussstellung, in der Fluid durch die Blockiereinrichtung fließen kann, einstellbar ist.

Arbeiten an besonders harten Werkstoffen, wie beispielsweise das (Kern-)Bohren in Gestein, erfordert stets ein gewisses Maß an Kühlflüssigkeit, um das Werkzeug zu kühlen und freigesetzten Bohrschlamm zu binden sowie abzutransportieren. Kühlsysteme für den Einsatz an Bohrgeräten, wie z.B. an Kernbohrgeräten, sind seit längerem bekannt. Als Kühlflüssigkeit dient gewöhnlich Wasser.

Derartige Kühlsysteme bestehen im Wesentlichen aus einem Vorrat an Kühlflüssigkeit, welcher normalerweise durch einen Anschluss an eine Wasserleitung verwirklicht ist, einer Vorrichtung (z.B. einer Pumpe) zur Förderung der Kühlflüssigkeit zu dem Werkzeug und wenigstens einer Kühlflüssigkeitsleitung für die Zuführung der Kühlflüssigkeit zum Werkzeug. Die Größe des Vorrats an Kühlflüssigkeit, die Leistung der Vorrichtung zur Förderung der Kühlflüssigkeit sowie die Menge (Volumen) an zugeführter Kühlflüssigkeit zu dem Werkzeug ist unter anderem von dem zu bearbeitenden Werkstoff, der Größe und Leistung der Werkzeugmaschine sowie von der gewünschten Arbeitsgeschwindigkeit (Fortschritt des Werkzeugs im Werkstoff) abhängig. Bei dem Bestimmen und Einstellen dieser verschiedenen Betriebswerte stellt insbesondere die Dosierung der zugeführten Kühlflüssigkeitsmenge zum Werkzeug für den Benutzer des Kühlsystems vor ein immer wiederkehrendes Problem, da die zugeführte Menge an Kühlflüssigkeit weder zu hoch noch zu niedrig sein sollte. Speziell die Einstellung von kleineren Mengen an zugeführter Kühlflüssigkeit zu einem Werkzeug ist bei den zum Stand der Technik gehörenden Kühlsystemen häufig nur unzureichend verwirklicht. Die Ursache liegt hierbei hauptsächlich in der Ausgestaltung der Absperrvorrichtung, welche für gewöhnlich in Form eines manuell betätigbaren Regelventils in der Kühlflüssigkeitsleitung positioniert ist und die Menge bzw. das Volumen an Kühlflüssigkeit zum Werkzeug regelt. Diese gebräuchlich als Regelventil ausgestalteten Absperrvorrichtungen lassen keine ausreichende Feindossierung an geringen Kühlflüssigkeitsmengen zu, so dass entweder das Regelventil nur komplett geschlossen oder aber viel zu weit geöffnet werden kann. Hierdurch fließt dann entweder gar keine Kühlflüssigkeit oder aber zu viel Kühlflüssigkeit zum Werkzeug.

Eine derartige Absperrvorrichtung in einer Flüssigkeitsleitung ist beispielsweise in der PCT-Patentanmeldung WO 2011/091798 offenbart. Die WO 2011/091798 zeigt dabei ein Ablassventil, mit dem das Volumen einer durch das Ventil fließenden Flüssigkeit reguliert werden kann. Das Ablassventil enthält ein Ventilgehäuse mit einer Eingangs- und Ausgangsöffnung. Sowohl an der Eingangs- und an der Ausgangsöffnung ist jeweils eine Flüssigkeitsleitung angeschlossen. In dem Ventilgehäuse befindet sich ein plattenförmiges Regulierelement, welches durch ein Handelement in dem Ventilgehäuse gedreht werden kann und dazu dient das Volumen der durch das Ablassventil strömenden Flüssigkeit zu regulieren. Hierzu wird das plattenförmige Regulierelement so vor die Eingangs- und Ausgangsöffnung gedreht, dass der Querschnitt der Durchflussöffnung an der Eingangs- und Ausgangsöffnung verkleinert wird. Durch die Verkleinerung des Querschnitts wird die Menge an Flüssigkeit, die das Ablassventil passieren kann, reduziert.

Wie bereits vorstehend beschrieben, ist auch bei dem in der WO 2011/091798 gezeigten Absperrventil nachteilig, dass keine ausreichende Feindosierung für geringe Mengen an Kühlflüssigkeit möglich ist.

Es ist daher Aufgabe der vorliegenden Erfindung eine verbesserte Absperrvorrichtung zum wenigstens teilweisen Blockieren eines Fluids in einer Fluidleitung bereitzustellen, mit dem eine Feindosierung auch für geringe Mengen an Kühlflüssigkeit möglich ist.

Die vorstehend genannte Aufgabe wird durch den erfindungsgemässen Gegenstand des unabhängigen Anspruchs 1 gelöst. Weitere vorteilhafte Ausgestaltungen der vorliegenden Erfindung sind in den abhängigen Ansprüchen beschrieben.

Die vorstehend genannte Aufgabe wird gelöst durch eine Absperrvorrichtung zum wenigstens teilweisen Blockieren eines Fluids in einer Fluidleitung enthaltend eine Blockiereinrichtung mit einem im Wesentlichen zylindrischen Grundkörper, die ein erstes Ende und ein zweites Ende enthält, wobei die Blockiereinrichtung in der Fluidleitung positionierbar ist und durch Drehen in eine Richtung (A) um eine Rotationsachse (R) reversibel von einer Blockierstellung, in der kein Fluid durch die Blockiereinrichtung fließen kann, in eine Durchflussstellung, in der Fluid durch die Blockiereinrichtung fließen kann, einstellbar ist.

Erfindungsgemäss ist dabei vorgesehen, dass die Blockiereinrichtung eine erste Durchlassöffnung und eine zweite Durchlassöffnung enthält, wobei der Querschnitt der ersten Durchlassöffnung kleiner ist als der Querschnitt der zweiten Durchlassöffnung. Durch den kleineren Querschnitt der ersten Durchlassöffnung wird die Regulierbarkeit des Durchflusses an kleineren Mengen an Fluid durch die Blockiereinrichtung verbessert.

Um durch ein entsprechendes Drehen der Blockiereinrichtung einen möglichst kontinuierlichen Anstieg der Menge an Fluid zu erreichen, die durch die Blockiereinrichtung fließt, kann gemäß einer vorteilhaften Ausgestaltungsform vorgesehen sein, dass die erste Durchlassöffnung und die zweite Durchlassöffnung über eine Durchgangsöffnung entlang der Mantelfläche des zylindrischen Grundkörpers miteinander verbunden sind.

Gemäss einer weiteren vorteilhaften Ausgestaltungsform der vorliegenden Erfindung kann vorgesehen sein, dass die erste Durchlassöffnung einen im Wesentlichen keilförmigen Querschnitt aufweist. Durch den keilförmigen Querschnitt der ersten Durchlassöffnung kann je nach Drehstellung der Blockiereinrichtung in der Fluidleitung die effektive Größe der ersten Durchlassöffnung und damit die Menge an Fluid, welche durch die Blockiereinrichtung und zu dem Werkzeug fließen kann, eingestellt werden.

Entsprechend einer weiteren vorteilhaften Ausgestaltungsform der vorliegenden Erfindung kann vorgesehen sein, dass der keilförmige Querschnitt wenigstens eine erste Oberfläche mit einer ersten Oberflächenkante und einer zweiten Oberflächenkante sowie eine zweite Oberfläche mit einer ersten Oberflächenkante, einer zweiten Oberflächenkante und einer dritten Oberflächenkante enthält, wobei sich die erste Oberfläche parallel zu der Rotationsachse erstreckt und sich die zweite Oberfläche so in einem Winkel zu der Rotationsachse erstreckt, dass ein erstes Ende der zweiten Oberflächenkante und ein erstes Ende der dritten Oberflächenkante im Wesentlichen in einem Punkt an dem zweiten Ende des zylindrischen Grundkörpers zusammentreffen. Hiermit kann durch entsprechendes Drehen der Blockiereinrichtung in der Fluidleitung die effektive Größe der ersten Durchlassöffnung und damit die Menge an Fluid, welche durch die Blockiereinrichtung und zu dem Werkzeug fließen kann, stetig erhöht oder reduziert werden.

Gemäss einer weiteren vorteilhaften Ausgestaltungsform der vorliegenden Erfindung kann vorgesehen sein, dass an dem zylindrischen Grundkörper der Blockiereinrichtung in Richtung (B) die erste Durchlassöffnung vor der zweiten Durchlassöffnung positioniert ist. Hierdurch ist sichergestellt, dass bei einem entsprechenden Drehen der Blockiereinrichtung in der Fluidleitung zuerst Fluid durch die erste Durchlassöffnung und nur bei einem weiteren Drehen der Blockiereinrichtung durch die zweite Durchlassöffnung fließt. Folglich fließt damit erst eine entsprechend kleine Menge an Fluid durch die Blockiereinrichtung zum Werkzeug.

Entsprechend einer weiteren vorteilhaften Ausgestaltungsform der vorliegenden Erfindung kann vorgesehen sein, dass an dem zylindrischen Grundkörper der Blockiereinrichtung in Richtung (B) die erste Oberfläche der ersten Durchlassöffnung vor der zweiten Oberfläche der ersten Durchlassöffnung positioniert ist. Hierdurch ist sichergestellt, dass das Vergrößern des Querschnitts der ersten Durchlassöffnung durch ein entsprechendes Drehen der Blockiereinrichtung stets durch einen Anstieg mit einem immer kleiner werdenden Querschnittanteil erfolgt.

Gemäss einer weiteren vorteilhaften Ausgestaltungsform der vorliegenden Erfindung kann vorgesehen sein, dass die Blockiereinrichtung durch Drehen in der Fluidleitung so ausgerichtbar ist, dass nur durch die erste Durchlassöffnung, durch die erste Durchlassöffnung und die zweite Durchlassöffnung oder nur durch die zweite Durchlassöffnung ein Durchfließen des Fluids durch die Blockiereinrichtung möglich ist. Hierdurch ist entweder ein kontinuierliches oder aber ein sprunghaftes Vergrößern des Durchflussvolumens an Fluid durch die Blockiereinrichtung sichergestellt.

Die vorliegende Erfindung wird bezüglich vorteilhafter Ausführungsbeispiele näher erläutert, hierbei zeigt
- Fig. 1: eine perspektivische Ansicht einer erfindungsgemäßen Absperrvorrichtung enthaltend eine Blockiereinrichtung mit einem zylindrischen Grundkörper;
- Fig. 2: eine Draufsicht auf die Absperrvorrichtung an einer Fluidleitung;
- Fig. 3: eine Seitenansicht auf die Absperrvorrichtung enthaltend die Blockiereinrichtung mit dem zylindrischen Grundkörper;
- Fig. 4: eine Schnittansicht durch die Absperrvorrichtung entlang der Schnittlinie A-A in Fig. 3.
- Fig. 5: eine perspektivische Ansicht auf die Absperrvorrichtung an einer geschnittenen Fluidleitung;
- Fig. 6: eine perspektivische Ansicht auf die Unterseite der Absperrvorrichtung an der geschnittenen Fluidleitung;
- Fig. 7: eine Unteransicht auf die Absperrvorrichtung mit der ersten Durchgangsöffnung und der zweiten Durchgangsöffnung an der geschnittenen Fluidleitung;
- Fig. 8: einen Ausschnitt der in Fig. 7 gezeigten Unteransicht auf die Absperrvorrichtung mit der ersten Durchgangsöffnung und der zweiten Durchgangsöffnung an der geschnittenen Fluidleitung;
- Fig. 9: eine Seitenansicht in Strömungsrichtung auf die Absperrvorrichtung an der geschnittenen Fluidleitung mit der Blockiereinrichtung in einer 0°-Stellung;
- Fig. 10: eine Seitenansicht entgegen der Strömungsrichtung auf die Absperrvorrichtung an der geschnittenen Fluidleitung mit der Blockiereinrichtung in einer 0°-Stellung;
- Fig. 11: eine Seitenansicht in Strömungsrichtung auf die Absperrvorrichtung an der geschnittenen Fluidleitung mit der Blockiereinrichtung in einer 25°-Stellung;
- Fig. 12: eine Seitenansicht entgegen der Strömungsrichtung auf die Absperrvorrichtung an der geschnittenen Fluidleitung mit der Blockiereinrichtung in einer 25°-Stellung;
- Fig. 13: eine Seitenansicht in Strömungsrichtung auf die Absperrvorrichtung an der geschnittenen Fluidleitung mit der Blockiereinrichtung in einer 45°-Stellung;
- Fig. 14: eine Seitenansicht entgegen der Strömungsrichtung auf die Absperrvorrichtung an der geschnittenen Fluidleitung mit der Blockiereinrichtung in einer 45°-Stellung;
- Fig. 15: eine Seitenansicht in Strömungsrichtung auf die Absperrvorrichtung an der geschnittenen Fluidleitung mit der Blockiereinrichtung in einer 55°-Stellung;
- Fig. 16: eine Seitenansicht entgegen der Strömungsrichtung auf die Absperrvorrichtung an der geschnittenen Fluidleitung mit der Blockiereinrichtung in einer 55°-Stellung;
- Fig. 17: eine Seitenansicht in Strömungsrichtung auf die Absperrvorrichtung an der geschnittenen Fluidleitung mit der Blockiereinrichtung in einer 90°-Stellung; und
- Fig. 18: eine Seitenansicht entgegen der Strömungsrichtung auf die Absperrvorrichtung an der geschnittenen Fluidleitung mit der Blockiereinrichtung in einer 90°-Stellung.

### AUSFÜHRUNGSBEISPIELE

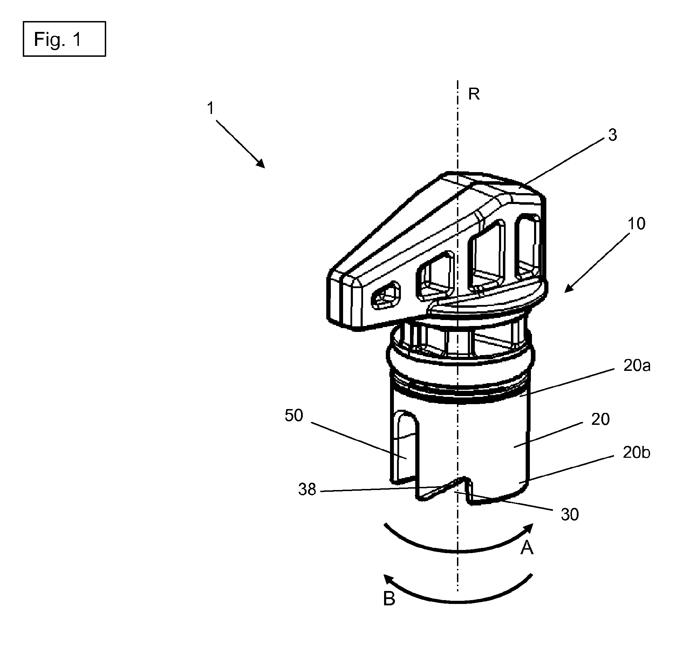

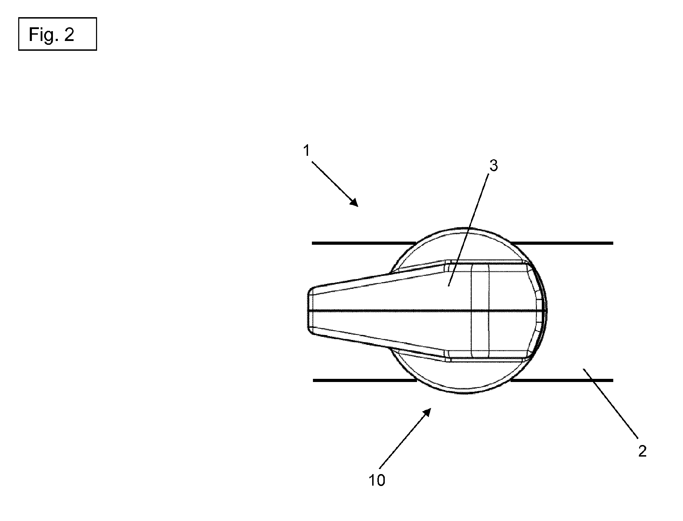

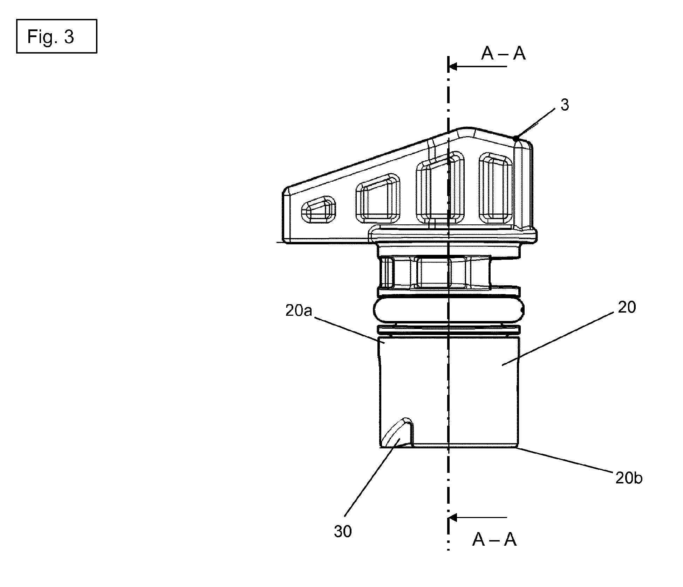

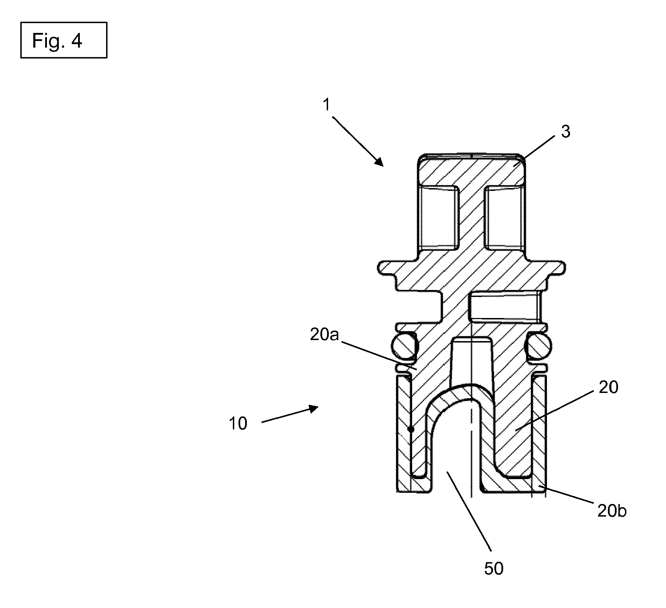

Fig. 1 bis 4 zeigt eine Absperrvorrichtung 1 zum wenigstens teilweisen Blockieren eines (nicht gezeigten) Fluids in einer Fluidleitung 2. Bei dem Fluid kann es sich um Wasser oder um eine andere Flüssigkeit handeln. Darüber hinaus ist es auch möglich, dass ein Gas verwendet wird. Die Absperrvorrichtung 1 kann Bestandteil eines nicht gezeigten Kühl- bzw. Spülsystems sein, welches dazu verwendet werden kann eine nicht gezeigte Werkzeugmaschine mit dem Fluid zu kühlen bzw. das Werkzeug der Werkzeugmaschine (z.B. eine Bohrkrone) zu spülen und von Bohrschlamm zu reinigen. Bei der Werkzeugmaschine kann es sich um eine Kehrbohrmaschine oder ähnlichem handeln.

Die Absperrvorrichtung 1 enthält ein Bedienelement 3 und eine Blockiereinrichtung 10 mit einem im Wesentlichen zylindrischen Grundkörper 20.

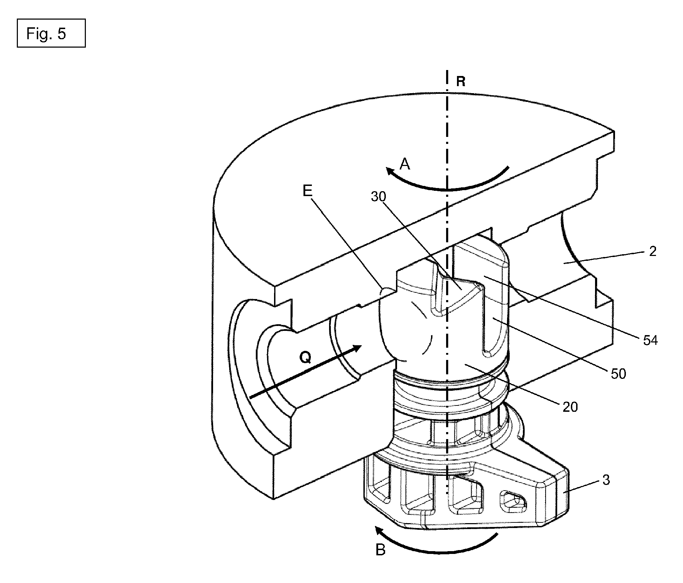

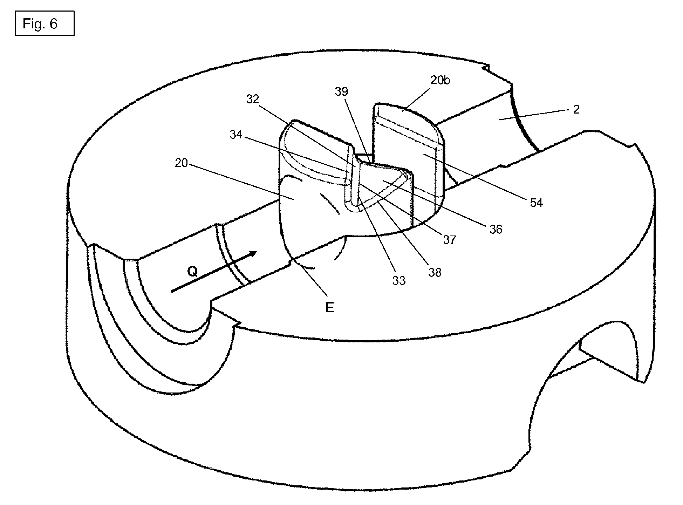

Der Grundkörper 20 weist ein erstes Ende 20a und ein zweites Ende 20b auf. Die Blockiereinrichtung 10 ist so in einer Fluidleitung 2 positioniert, dass das erste Ende 20a des Grundkörpers 20 aus der Fluidleitung 2 herausragt und das zweite Ende 20b des Grundkörpers 20 in der Fluidleitung 2 drehbar angeordnet ist (vgl. Fig. 5 und 6).

Das Bedienelement 3 ist in Form eines Drehhebels ausgestaltet und an dem ersten Ende 20a des zylindrischen Grundkörpers 20 positioniert. Das als Drehhebel ausgebildete Bedienelement 3 dient dazu die Blockiereinrichtung 10 in der Fluidleitung 2 zu drehen bzw. auszurichten. Die Blockiereinrichtung 10 ist in einer Fluidleitung 2 positioniert, um je nach Stellung der Blockiereinrichtung 10 in der Fluidleitung 2 den Durchfluss des Fluids, d.h. einer Flüssigkeit oder eines Gases, zu blockieren oder freizugeben. Hierdurch kann die Menge an Fluid reguliert werden, die durch die Blockiereinrichtung 10 und zu der Werkzeugmaschine fließt. Das Fluid ist nicht in den Figuren dargestellt.

Der zylindrische Grundkörper 20 der Blockiereinrichtung 10 enthält eine erste Durchlassöffnung 30 und eine zweite Durchlassöffnung 50 (vgl. Fig. 5 und 6).

Sowohl die erste Durchlassöffnung 30 als auch die zweite Durchlassöffnung 50 enthalten einen Durchgang durch den zylindrischen Grundkörper 20 der Blockiereinrichtung 10, durch die das Fluid fließen kann. Der Querschnitt der ersten Durchlassöffnung 30 ist dabei kleiner als der Querschnitt der zweiten Durchlassöffnung 50, wodurch ein kleines Volumen an Fluid pro Zeiteinheit durch die erste (kleinere) Durchlassöffnung 30 fließen kann.

Die erste Durchlassöffnung 30 enthält einen im Wesentlichen keilförmigen Querschnitt, wodurch die erste Durchlassöffnung 30 entlang des Bodens des zylindrischen Grundkörpers 20 eine erste Oberfläche 32 und eine zweite Oberfläche 36 aufweist. Die erste Oberfläche 32 enthält wiederum eine erste Oberflächenkante 33 und eine zweite Oberflächenkante 34. Des Weiteren weist die zweite Oberfläche 36 eine erste Oberflächenkante 37, eine zweite Oberflächenkante 38 und eine dritte Oberflächenkante 39 auf. Die zweite Oberfläche 36 enthält somit im Wesentlichen eine Dreiecksform (vgl. Fig. 5, 6 und 18).

Die erste Oberflächenkante 33 der ersten Oberfläche 32 grenzt an die erste Oberflächenkante 37 der zweiten Oberfläche 36 an. Die zweite Oberflächenkante 38 der zweiten Oberfläche 36 verläuft entlang der Mantelfläche des zylindrischen Grundkörpers 20. Die dritte Oberflächenkante 39 der zweiten Oberfläche 36 verläuft entlang der zweiten Durchlassöffnung 50.

Die zweite Durchlassöffnung 50 enthält einen im Wesentlichen rechteckigen Querschnitt mit einer ersten Wandfläche 52, einer zweiten Wandfläche 54 und einer dritten Wandfläche 56. Die erste Wandfläche 52 und die zweite Wandfläche 54 liegen sich gegenüber. Die dritte Wandfläche 56 ist im Wesentlichen in Bogenform ausgestaltet und verbindet die erste Wandfläche 52 mit der zweiten Wandfläche 54.

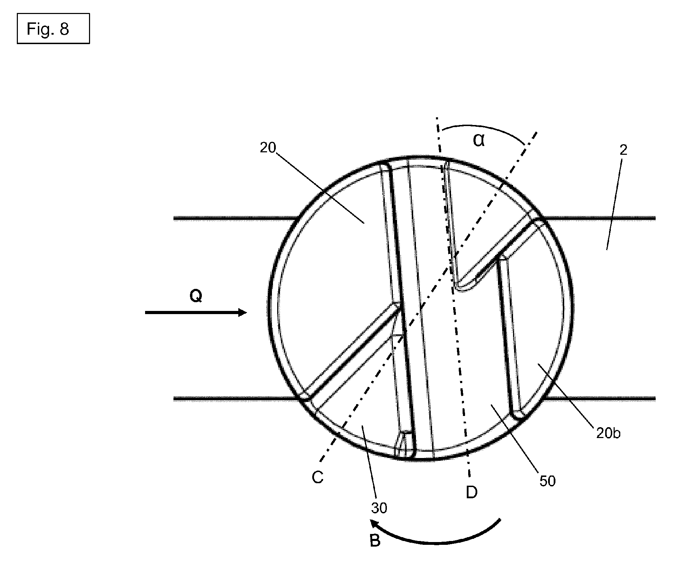

Die erste Durchgangsöffnung 30 kreuzt die zweite Durchgangsöffnung 50. Wie in Fig. 8 gezeigt, kreuzt die Mittellinie C der ersten Durchgangsöffnung 30 die Mittellinie D der zweiten Durchgangsöffnung 50 in einem stumpfen Winkel (α).

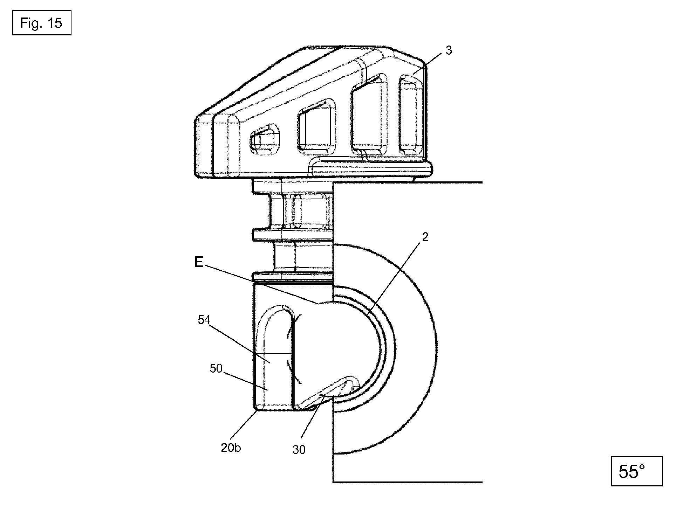

Wie bereits vorstehend beschrieben, ist die Absperrvorrichtung 1 an der Fluidleitung 2 drehbar positioniert. Die Blockiereinrichtung 10 befindet sich dabei drehbar gelagert in der Fluidleitung 2. Durch Drehen in Richtung A oder B der Absperrvorrichtung 1 mit Hilfe des Drehhebels 3 wird die Blockiereinrichtung 10 in der Fluidleitung 2 entsprechend ausgerichtet. Gemäß der jeweiligen Drehposition der Blockiereinrichtung 10 wird entweder ein größerer oder kleinerer Querschnitt der ersten Durchlassöffnung 30 für das Fluid zum Durchfließen der Blockiereinrichtung 10 freigegeben. Die Blockiereinrichtung 10 kann auch vollständig blockiert sein, so dass kein Fluid durch die Blockiereinrichtung 10 fließen kann. Wie in Fig. 15 dargestellt, ist es in einer entsprechenden Drehposition (55°-Stellung) der Blockiereinrichtung 10 auch möglich, dass das Fluid sowohl durch die erste Durchlassöffnung 30 als auch durch die zweite Durchlassöffnung 50 fließt.

Gemäß einer alternativen Ausgestaltungsform der erfindungsgemäßen Absperrvorrichtung 1 kann vorgesehen sein, dass die erste Durchlassöffnung 30 durch eine (nicht gezeigte) Durchgangsöffnung mit der zweiten Durchlassöffnung 50 verbunden ist. Hierdurch kann ein schnellerer Anstieg des Durchflussvolumens des Fluids pro Zeiteinheit durch die Blockiereinrichtung erreicht werden, da der Querschnitt der ersten Durchlassöffnung 30 durch ein entsprechendes Ausrichten der Blockiereinrichtung 10 in der Fluidleitung 2 schneller vergrößert wird, als ohne zusätzliche Durchgangsöffnung.

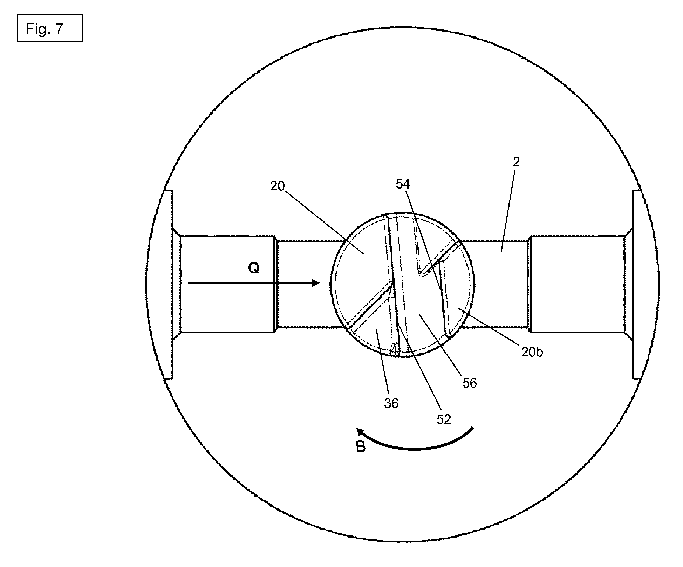

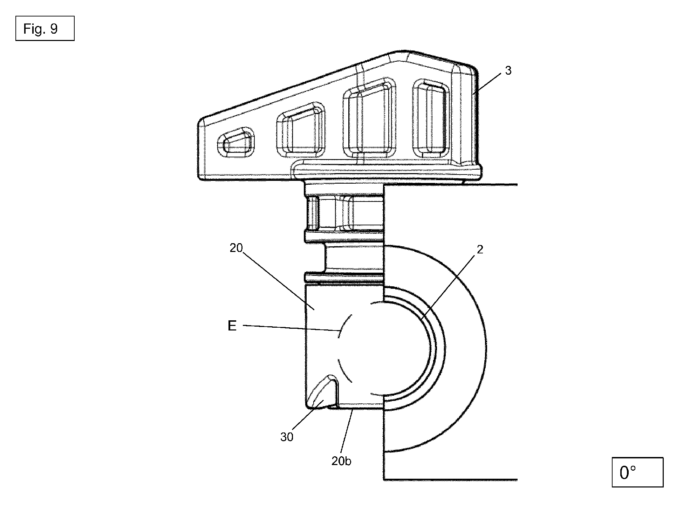

In den Figuren 9 bis 18 sind verschiedene Drehstellungen der Blockiereinrichtung 10 in der Fluidleitung 2 dargestellt. Durch ein Drehen der Blockiereinrichtung 10 in Drehrichtung A und entsprechend der jeweiligen Drehposition der Blockiereinrichtung 10 kann mehr oder weniger Fluid pro Zeiteinheit durch die Blockiereinrichtung 10 fließen kann, da der keilförmige Querschnitt der ersten Durchlassöffnung 30 größer oder kleiner ist. Der Kreis E deutet jeweils die Kontaktfläche der Fluidleitung 2 an der Blockiereinrichtung 10 an (vgl. Fig. 5, 6, 9 bis 18). Die nachfolgenden Grad-Stellungen beziehen sich auf die jeweilige Rotation der Blockiereinrichtung 10 in der Fluidleitung 2 in Grad (°) in Bezug zu der Ausgangsposition (0°), in der die Blockiereinrichtung 10 vollständig geschlossen ist, d.h. kein Fluid durch die Blockiereinrichtung 10 fließen kann. Zum Öffnen der Blockiereinrichtung 10 in der Fluidleitung 2 in die Blockiereinrichtung 10 in Richtung B (vgl. Fig. 5, 7, 8) gedreht.

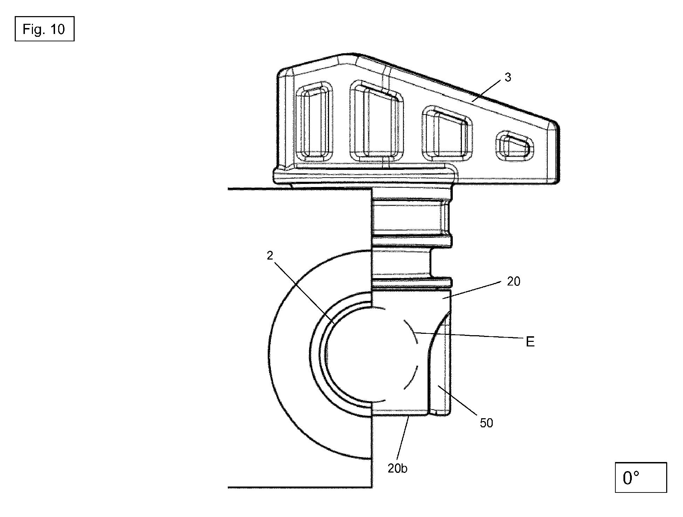

Wie in Fig. 9 und 10 gezeigt, befindet sich die Blockiereinrichtung 10 in einer 0°-Stellung, so dass die erste und zweite Durchlassöffnung 30, 50 geschlossen sind und kein Fluid durch die Blockiereinrichtung 10 fließen kann. Fig. 9 ist die Ansicht in Strömungsrichtung Q des Fluids durch die Fluidleitung 2. Fig. 10 ist die Ansicht entgegen der Strömungsrichtung Q des Fluids durch die Fluidleitung 2.

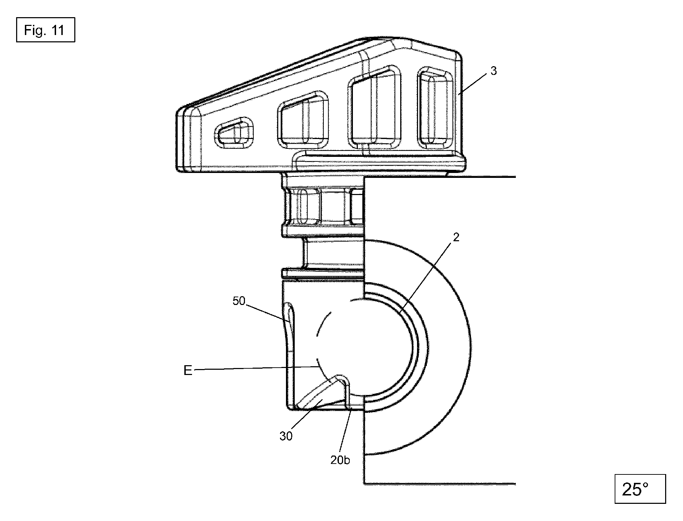

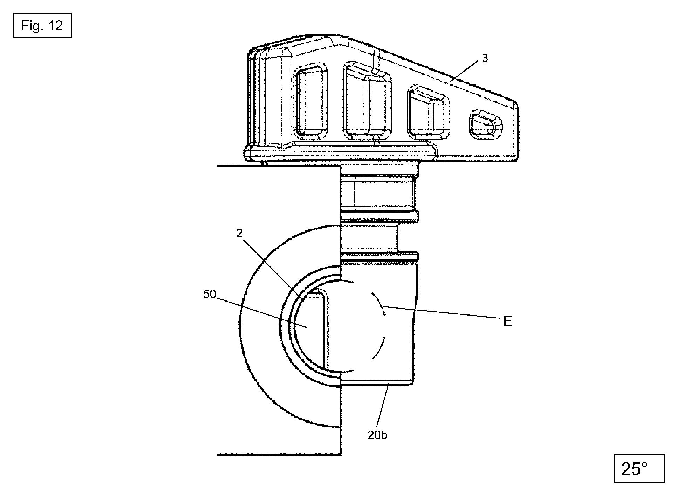

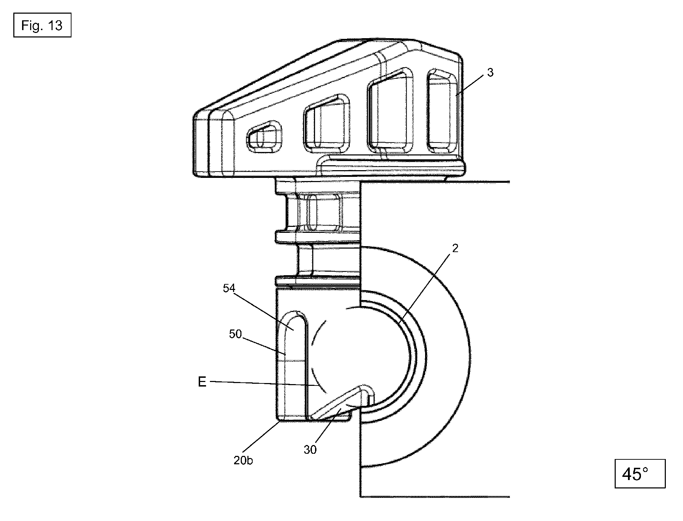

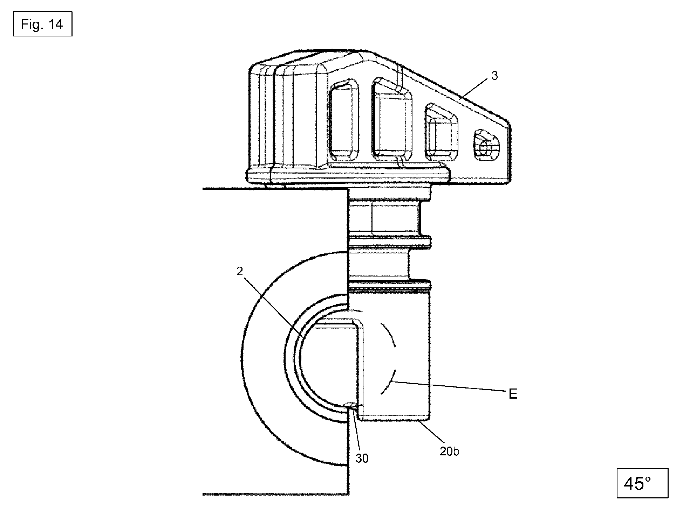

Wie in Fig. 11 und 12 gezeigt, befindet sich die Blockiereinrichtung 10 in einer 25°-Stellung, so dass die erste Durchlassöffnung 30 geöffnet und ein wenig Fluid durch die Blockiereinrichtung 10 fließen kann. Fig. 11 ist die Ansicht in Strömungsrichtung Q des Fluids durch die Fluidleitung 2. Fig. 12 ist die Ansicht entgegen der Strömungsrichtung Q des Fluids durch die Fluidleitung 2. Wie in Fig. 13 und 14 dargestellt, befindet sich die Blockiereinrichtung 10 in einer 45°-Stellung, in der die erste Durchlassöffnung 30 noch etwas weiter geöffnet ist und ein wenig mehr Fluid pro Zeiteinheit durch die Blockiereinrichtung 10 fließen kann. Fig. 13 ist die Ansicht in Strömungsrichtung Q des Fluids durch die Fluidleitung 2. Fig. 14 ist die Ansicht entgegen der Strömungsrichtung Q des Fluids durch die Fluidleitung 2.

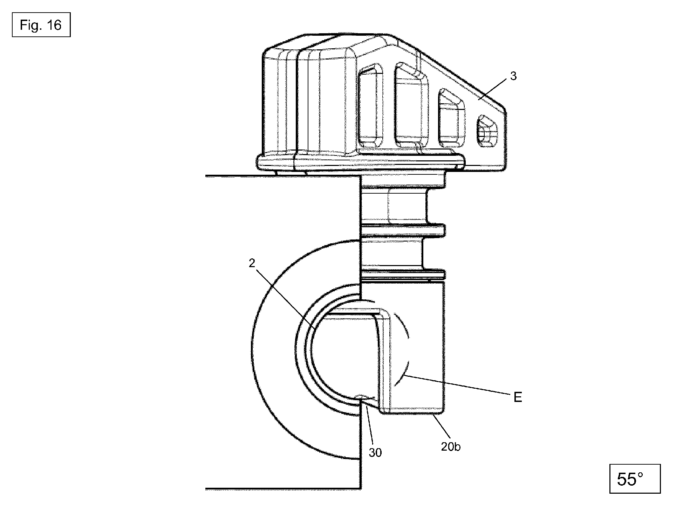

Wie in Fig. 15 und 16 dargestellt, befindet sich die Blockiereinrichtung 10 in einer 55°-Stellung, in der die erste Durchlassöffnung 30 maximal geöffnet ist. Fig. 15 ist die Ansicht in Strömungsrichtung Q des Fluids durch die Fluidleitung 2. Fig. 16 ist die Ansicht entgegen der Strömungsrichtung Q des Fluids durch die Fluidleitung 2.

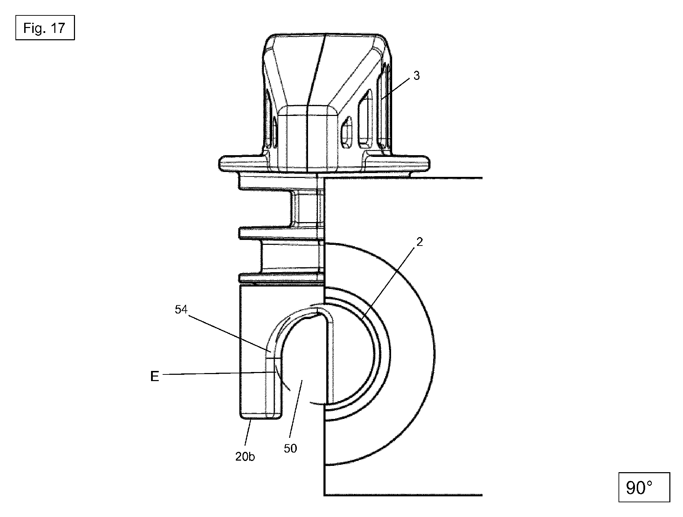

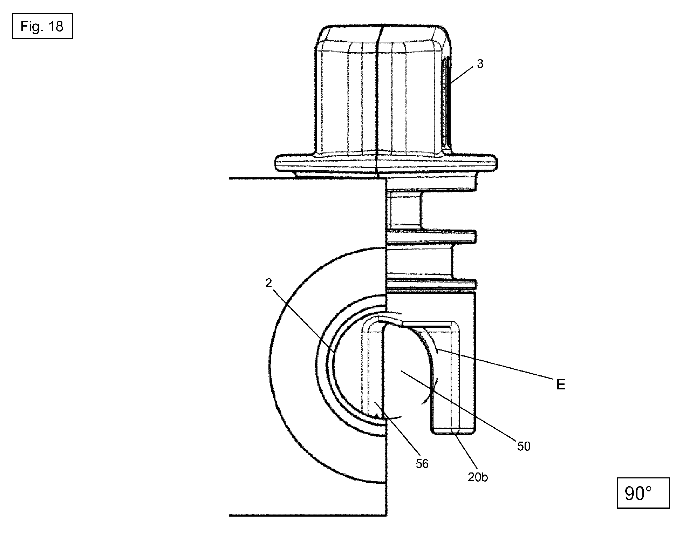

Wie in Fig. 17 und 18 dargestellt, befindet sich die Blockiereinrichtung 10 in einer 90°-Stellung, in der die zweite Durchlassöffnung 50 maximal geöffnet und die erste Durchgangsöffnung 30 wiederum geschlossen ist. In dieser 90°-Stellung fließt das maximale Volumen an Fluid pro Zeiteinheit durch die Blockiereinrichtung 10. Fig. 17 ist die Ansicht in Strömungsrichtung Q des Fluids durch die Fluidleitung 2. Fig. 18 ist die Ansicht entgegen der Strömungsrichtung Q des Fluids durch die Fluidleitung 2.

Aufgrund des speziellen keilförmigen Querschnitts und der besonderen Ausrichtung der ersten Durchlassöffnung 30 in der Blockiereinrichtung 10 kann die Menge an Fluid, die durch die Blockiereinrichtung 10 fließt und zum Kühlen bzw. Spülen an die Werkzeugmaschine gefördert wird, sehr genau dosiert werden. Hierbei können insbesondere kleine Mengen an Kühlflüssigkeit (Fluid), die zur Kühlung an das Werkzeug gefördert werden, optimal eingestellt werden.

## Patentansprüche

1. Absperrvorrichtung (1) zum wenigstens teilweisen Blockieren eines Fluids in einer Fluidleitung (2) enthaltend eine Blockiereinrichtung (10) mit einer im Wesentlichen zylindrischen Grundkörper (20), die ein erstes Ende (20a) und ein zweites Ende (20b) enthält, wobei die Blockiereinrichtung (10) in der Fluidleitung (2) positionierbar ist und durch Drehen in eine Drehrichtung (A) um eine Rotationsachse (R) reversibel von einer Blockierstellung, in der kein Fluid durch die Blockiereinrichtung (10) fließen kann, in eine Durchflussstellung, in der Fluid durch die Blockiereinrichtung (10) fließen kann, einstellbar ist;
**dadurch gekennzeichnet, dass** die Blockiereinrichtung (10) eine erste Durchlassöffnung (30) und eine zweite Durchlassöffnung (50) enthält, wobei der Querschnitt der ersten Durchlassöffnung (30) kleiner ist als der Querschnitt der zweiten Durchlassöffnung (50).

2. Absperrvorrichtung (1) nach Anspruch 1,
**dadurch gekennzeichnet, dass** die erste Durchlassöffnung (30) und die zweite Durchlassöffnung (50) über eine Durchgangsöffnung entlang der Mantelfläche des zylindrischen Grundkörpers (20) miteinander verbunden sind.

3. Absperrvorrichtung (1) nach Anspruch 1 oder 2,
**dadurch gekennzeichnet, dass** die erste Durchlassöffnung (30) einen im Wesentlichen keilförmigen Querschnitt aufweist.

4. Absperrvorrichtung (1) nach Anspruch 3,
**dadurch gekennzeichnet, dass** der keilförmige Querschnitt wenigstens eine erste Oberfläche (32) mit einer ersten Oberflächenkante (33) und einer zweiten Oberflächenkante (34) sowie eine zweite Oberfläche (36) mit einer ersten Oberflächenkante (37), einer zweiten Oberflächenkante (38) und einer dritten Oberflächenkante (39) enthält, wobei sich die erste Oberfläche (32) parallel zu der Rotationsachse (R) erstreckt und sich die zweite Oberfläche (36) so in einem Winkel zu der Rotationsachse (R) erstreckt, dass ein erstes Ende (38a) der zweiten Oberflächenkante (38) und ein erstes Ende (39a) der dritten Oberflächenkante (39) im Wesentlichen in einem Punkt (P) an dem zweiten Ende (20b) des zylindrischen Grundkörpers (20) zusammentreffen.

5. Absperrvorrichtung (1) nach wenigstens einem der Ansprüche 1 bis 4,
**dadurch gekennzeichnet, dass** an der zylindrischen Grundkörper (20) der Blockiereinrichtung (10) in Richtung (B) die erste Durchlassöffnung (30) vor der zweiten Durchlassöffnung (50) positioniert ist.

6. Absperrvorrichtung (1) nach Anspruch 4 oder 5,
**dadurch gekennzeichnet, dass** an dem zylindrischen Grundkörper (20) der Blockiereinrichtung (10) in Richtung (B) die erste Oberfläche (32) der ersten Durchlassöffnung (30) vor der zweiten Oberfläche (36) der ersten Durchlassöffnung (30) positioniert ist.

7. Absperrvorrichtung (1) nach wenigstens einem der Ansprüche 1 bis 6,
**dadurch gekennzeichnet, dass** die Blockiereinrichtung (10) durch Drehen in der Fluidleitung (2) so ausgerichtbar ist, dass nur durch die erste Durchlassöffnung (30), durch die erste Durchlassöffnung (30) und die zweite Durchlassöffnung (50) oder nur durch die zweite Durchlassöffnung (50) ein Durchfließen des Fluids durch die Blockiereinrichtung (10) möglich ist.
